# EUROPÄISCHE PATENTSCHRIFT

(11) **EP 2 210 308 B1**
(45) Veröffentlichungstag und Bekanntmachung des Hinweises auf die Patenterteilung: **20.04.2011**
(21) Anmeldenummer: 08847681.7
(22) Anmeldetag: 05.11.2008
(51) Int. Cl.: H01M 8/12

(54) **FUNKTIONSSCHICHT FÜR HOCHTEMPERATURBRENNSTOFFZELLEN UND VERFAHREN ZUR HERSTELLUNG**
FUNCTIONAL LAYER FOR HIGH-TEMPERATURE FUEL CELLS AND METHOD FOR PRODUCTION
COUCHE FONCTIONNELLE POUR DES PILES À COMBUSTIBLE À HAUTE TEMPÉRATURE, ET SON PROCÉDÉ DE FABRICATION

(30) Priorität: 05.11.2007 DE 102007053075
(43) Veröffentlichungstag der Anmeldung: 28.07.2010
(73) Patentinhaber: Fraunhofer-Gesellschaft zur Förderung der angewandten Forschung e.V., 80686 München (DE)
(72) Erfinder: TROFIMENKO, Nikolai, 01069 Dresden (DE); MOSCH, Sindy, 01159 Dresden (DE); SAUCHUK, Viktar, 01069 Dresden (DE); LUCKE, Karin, 01217 Dresden (DE); KUSNEZOFF, Mihails, 01309 Dresden (DE)
(74) Vertreter: Pfenning, Meinig & Partner GbR
(86) Internationale Anmeldenummer: PCT/DE2008/001860
(87) Internationale Veröffentlichungsnummer: WO 2009/059601

(56) Entgegenhaltungen:
- DE-A1- 19 941 282
- DE-U1- 9 304 984
- JP-A- 2005 166 510
- US-A- 5 306 411

## Beschreibung

Die Erfindung betrifft eine Funktionsschicht für Hochtemperaturbrennstoffzellen und ein Verfahren zur Herstellung von Funktionsschichten. Die Funktionsschicht ist insbesondere eine niedrig sinternde, elektrisch leitfähige, keramische Schicht, die zwischen einem Interkonnektor und einer Kathode einer Brennstoffzelle ausgebildet ist.

Hochtemperaturbrennstoffzellen werden für Betriebstemperaturen zwischen 650°C und 1000°C entwickelt. Je nach Entwicklungsziel kommen unterschiedliche Werkstoffe zum Einsatz. Bekannt sind Kathoden einer SOFC-Brennstoffzelle, die aus keramischem Werkstsoff bestehen. Bekannt sind auch Interkonnektoren, die aus Metall bestehen.

Unter einer Funktionsschicht ist eine Schicht zu verstehen, die eine definierte Funktion zu erfüllen hat. Eine Kontaktschicht, die die elektrisch leitfähige Funktion zwischen Kathode und Interkonnektor innerhalb der Brennstoffzelle übernimmt stellt ein Beispiel für eine solche Funktionsschicht dar. Diese Funktionsschicht gewährleistet einerseits einen elektrischen Kontakt zwischen den beiden Bauteilen, mit denen diese Schicht in Folge eines Fügeprozesses eine beidseitige stoffschlüssige Verbindung mit beiden Bauteilen bildet.

Bisher verwendete Werkstoffe für eine Funktionsschicht zwischen Kathode und Interkonnektor aus Lanthanmanganit oder Lanthankobaltit sind bei Temperaturen von 950°C oder darunter wenig sinteraktiv, d.h. die notwendigen Diffusionsprozesse sind zu gering, um einen guten elektrischen Kontakt und ausreichende Haftung zu Grenzflächen zu realisieren. Nachteilig ist es auch, dass die Schichten, die sich aus diesen Stoffen bilden, sehr porös sind und dadurch eine Korrosion des Interkonnektors durch Luft im Kathodenraum nicht verhindern können.

Gemäß DE 19710345 C1 wird zur Realisierung der Verbindung zwischen Kathode und Interkonnektor eine Paste vorgesehen, bei der eine erste Phase aus Glas oder Glaskeramik besteht und eine zweite Phase elektrisch leitfähig ist. Die Paste besteht in der Regel aus einem ähnlichen oder gleichen Material, wie die Kathode. Diese Paste wird zunächst auf den Interkonnektor aufgetragen. Der Interkonnektor und die angrenzende Kathode werden anschließend mit der Paste auf eine Temperatur von bis 900°C erwärmt. Temperaturen oberhalb von 900°C sind aber dauerhaft für den Werkstoff des Interkonnektors, da dieser üblicherweise aus einem Stahl gebildet ist.

Es ist auch üblich ein Glaslot zur Abdichtung von Brennstoffzellen einzusetzen. Ein hierfür eingesetztes Glaslot widersteht aber Temperaturen oberhalb von 900°C ebenfalls nicht.

Nachteilig bei dieser bekannten Paste ist es auch, dass sie erst im Anschluss an eine Sinterung elektrisch leitfähig ist. Bei 900°C sintert sie regelmäßig nicht oder zu gering. Daher weist die Paste im Betrieb einer Hochtemperaturbrennstoffzelle eine geringe elektrische Leitfähigkeit auf.

Wie in DE 19749004 C1 beschrieben ist, wurde eine elektrisch leitfähige Verbindung zwischen einem keramischen und einem metallischen Bauteil mit einer gesinterten, elektrisch leitfähigen Paste zwischen beiden Bauteilen realisiert. Hergestellt wird diese Verbindung, indem auf ein keramisches Bauteil (z.B. einer keramischen Kathode) die Paste zumindest an den Stellen aufgetragen wird, an denen das zweite Bauteil (z.B. Stege eines Interkonnektors) die keramische Oberfläche kontaktieren soll. Wobei die elektrische Leitfähigkeit der Paste durch Sinterung verbessert werden kann. Die Oberfläche mit der gesinterten Paste wird geschliffen, bis eine ebene Oberfläche zur geeignete Kontaktierung hergestellt ist. Handelt es sich bei dem Bauteil um eine Elektroden-Elektrolyt-Einheit mit einer dünnen Kathode, so wird die Kathode aufgrund der gewählten Dicken der Paste durch das Schleifen nicht abgetragen.

Das Pulver kann, je nach Sintertemperatur, aus einer Glas-Metallkombination oder aus einem keramischen Pulver gebildet sein. Für niedrige Sintertemperaturen (< 800°C) enthält die Paste einerseits ein Pulver aus den Ausgangsstoffen für Glas und andererseits pulverisiertes Silber im Volumenverhältnis 1:1. Anstelle des Silbers kann auch Silberoxidpulver und/oder eine Silberlegierung in Pulverform, jeweils auch zusammen mit Silberpulver, verwendet werden. Da Silber sehr edel ist, kann es sogar für Kontaktschichten in Kathodenräumen (Räume, in denen sich die Kathoden befinden) einer Brennstoffzelle zwischen Interkonnektor und Kathode verwendet werden, obwohl dort wegen der zugeführten Luft eine oxidierende Atmosphäre vorhanden ist.

Die aus DE 19749004 bekannten Kontaktierungen weisen generell folgende Nachteile auf:
- Auf Grund des hohen Dampfdrucks des Silbers bei T>800°C sind die Kontaktschichten auf Basis Silber-Glass Keramik nicht langzeitstabil.
- Nachteilig ist auch, dass die Schichten, die sich aus solchen Pasten bilden, eine Vergiftung der Kathode durch Cr-Abdampfung aus dem Interkonnektor durch die durchströmende Luft im Kathodenraum nicht verhindern können.

Gemäß DE 19941282 C1 wird zur Realisierung einer elektrisch leitfähigen Kontaktierung zwischen einem Interkonnektor und einer Kathode einer Brennstoffzelle ein Gemisch genutzt, das Kuprate, CuO/Kuprat-Verbindungen oder Silber/Kuprat-Verbindungen aufweist, und Schmelzen oder Teilschmelzen im Temperaturbereich von 800-1400°C bildet. Vorzugweise als Kuprate wurden Verbindungen mit folgender Zusammensetzung: (La,Sr)₂CuO₄₋ₓ, (La, Sr) CuO_{2.4+x}, YBa₂CU₃O₇₋ₓ, Bi₂Sr₂Ca₂Cu₂O₈₊ₓ oder auch Bi₂(Sr,Ca)₂CuO₆₊ₓ bzw. (Bi, Pb)₂Sr₂Ca₂Cu₃O₁₀₊ₓ eingesetzt. Außerdem sind als Stoffe für die Kontaktierung auch Gemische von CuO und Kupraten bzw. Ag und Kupraten geeignet. Dabei können die Anteile von CuO in dem Gemisch bis zu 30 Gew.-% bzw. von Ag bis zu 10 Gew.-% betragen. Die aus DE 19941282 bekannten Kontaktierungen weisen aber folgende Nachteile auf:
- Auf Grund des hohen Dampfdrucks des Kupfers bei T>850°C sind die Kontaktschichten auf Basis von Kuprat-Verbindungen nicht langzeitstabil. Zum Beispiel zeigt (La, Sr) CuO_{2.4+x} nach der Sinterung bei Temperaturen > 900°C kontinuierlich Phasenumwandlungen von der Perowskitstruktur in die K₂NiF₄ -Struktur auf. Diese Phasenumwandlung kann die Schichteigenschaften sehr negativ beeinflussen, was sich besonders bei einer Thermozyklisierung auswirkt. Die K₂NiF₄-Struktur weist einen geringeren thermischen Ausdehnungkoeffizienten auf, was zu Inkompabilitäten mit den anderen Zellschichten führt.
- Außerdem können mit den Schichten auch mechanische Einflüsse, wie Schwingungen, Druckänderungen und Zugspannungen nicht immer ausgeglichen werden bzw. ein ausreichend großer Widerstand gegen solche Einflüsse erreicht werden, und dementsprechend wird auch wieder die elektrisch leitende Verbindung in unerwünschter Form beeinträchtigt.
- Nachteilig ist auch, dass die Schichten, die sich aus solchen Pasten bilden, einen Schutz der Kathode vor Cr-Abdampfung aus einem Interkonnektor durch die durchströmende Luft im Kathodenraum nicht gewährleisten können.

Es ist daher Aufgabe der Erfindung, eine dahingehend verbesserte Funktionsschicht für Hochtemperaturbrennstoffzellen zur Verfügung zu stellen, die bei Temperaturen in Bereich von 750-950°C in Folge eines Fügeprozesses eine elektrische leitfähige Schicht zwischen einer Kathode und einem Interkonnektor bilden kann, und die bei erhöhten Betriebstemperaturen bis hin zu 950°C dauerhaft eine erhöhte elektrische Leitfähigkeit sichert.

Erfingdungsgemäß wird diese Aufgabe mit einer Funktionsschicht, die die Merkmale des Anspruchs 1 aufweist, gelöst. Ein Verfahren für solche Funktionsschichten ist mit Anspruch 8 definiert.

Vorteilhafte Ausgestaltungen und Weiterbildungen der Erfindung können mit in den untergeordneten Ansprüchen bezeichneten Merkmalen erreicht werden.

Die erfindungsgemäße Funktionsschicht ist eine elektrisch leitfähige Schicht, die aus einer Pulvermischung in der kobalthaltige Perowskit-Keramik und Bismutoxid enthalten sind, hergestellt wird.

Die erfindungsgemäße elektrische Funktionsschicht besitzt eine hohe elektrische Leitfähigkeit und kann mit einer Wärmebehandlung bei Temperaturen zwischen 700 und 1000 °C, bevorzugt zwischen 750°C bis 950°C gut haftende Schichten auf einem Interkonnektor bzw. einer Kathode ausbilden.

Als Ausgangsstoff für die Funktionsschicht werden kobalthaltige Perowskite eingesetzt. Dazu gehören diese mit der Zusammensetzung Ln_{1-x-z}AₓM_{1-y}CoyO_{3-δ} mit x≤0.35, 0≤z≤0.05, 0.1≤y≤0.6, Ln = Seltenerden, A = Erdalkali und M = Übergangsmetalle. Es hat sich überraschenderweise herausgestellt, dass nur durch die Reaktion mit kobalthaltigem Perowskit eine erfindungsgemäße elektrische Funktionsschicht herstellbar ist.

Außerdem sind für die Herstellung erfindungsgemäßer elektrischer Funktionsschichten Bismut-Kobalthaltige Perowskite Ln_{1-x-y}Bi_{z}AₓM_{1-y}Co_{y}O_{3-δ} mit x≤0.35, 0≤z≤0.05, 0.1≤y≤0.6, Ln = Seltenerden, A = Erdalkali, M = Übergangsmetalle und Bi-Mn-Co-O Oxide, auf Bismutmanganit und/oder Bismutkobaltit Basis, geeignet. Sie können in-situ bei einer Wärmebehandlung aus einem Pulvergemisch, in dem kobalthaltiges Perowskit und Bismutoxid enthalten sind, hergestellt werden.

Dabei können die Anteile von kobalthaltigen Perowskiten in dem Gemisch bis zu 90 Vol.% und der Anteil des zweiten Pulvers (B₂O₃) bis 10 Vol.% betragen.

Durch eine thermische Behandlung im Temperaturbereich zwischen 700°C bis 1000°C reagieren Bi₂O₃ und der kobalthaltige Perowskit unter der Bildung von Bismut-Kobalthaltigem Perowskit mit der Zusammensetzung (Ln_{1-x-z}Bi_{z}AₓM_{1-y}Co_{y}O_{3-δ} mit x≤0.35, 0≤z≤0.05, 0.1≤y≤0.6, Ln = Seltenerden, A = Erdalkali, M = Übergangsmetalle) als eine erste Phase und Bi-Mn-Co-O Oxid als eine zweite Phase. Die beiden Phasen sollten im Funktionsschichtwerkstoff homogen verteilt vorliegen. Sie können dabei einen stoffschlüssigen Kontakt zwischen der Kathode, der Funktionsschicht und dem Interkonnektor realisieren.

Die erste Phase kann mit einem Anteil 90 bis 98 Vol.-% und die zweite Phase mit einem Anteil von 2 bis 10 Vol.-% im Werkstoff enthalten sein.

Der in-situ gebildete, die zwei Phasen aufweisende Werkstoff, aus dem die Funktionsschicht gebildet wird, ist elektrisch gut leitfähig und weist im Vergleich zu konventionellen Perowskiten eine deutlich verbesserte Sinterfähigkeit auf.

Die elektrische Leitfähigkeit sollte bei einer normalen Betriebstemperatur von Hochtemperaturbrennstoffzellen, also auch oberhalb von 700 °C, mindestens 10 S/cm, bevorzugt mindestens 30 S/cm erreichen.

Eine verbesserte Sinterfähigkeit bedeutet dabei, dass die Sinterung im Bereich ab 700°C beginnt und liegt damit deutlich unterhalb 1000°C. So kann eine Flüssigphasensinterung erreicht werden. Durch geeignete Variation in der Zusammensetzung und der Anteile der Ausgangswerkstoffe können gewünschte Temperaturen im Bereich zwischen 700°C und 900°C gewählt werden. Während der Wärmebehandlung, bei der auch ein stoffschlüssiges Fügen erreichbar ist, kann aufgrund der guten Sinterfähigkeit, die Schwindung der sich bildenden Funktionsschicht sehr gut an die Schwindung einer gleichzeitig zu sinternden Glaskeramik/Glaslot angepasst werden, die für die Abdichtung der Gasräume zwischen Anode und Kathode einer Hochtemperaturbrennstoffzelle eingesetzt werden kann. Hierfür geeignete Glaskeramiken sind aus dem Stand der Technik bekannt.

Ein Vorteil der erfindungsgemäßen Funktionsschicht besteht darin, dass sie nicht nur eine gute elektrische leitfähige und fest haftende Verbindung zwischen dem Interkonnektor und der Kathode bilden kann, sondern gleichzeitig auch die Kathode vor Chrom-Kontaminationen schützt.

Die zweite oxidische Phase Bi-Mn-Co-O reagiert bei den erwähnten hohen Temperaturen und vorliegender oxidierender Betriebsatmosphäre mit den freigesetzten chromhaltigen Oxidverbindungen aus dem Interkonnektor zu einer Bi-Mn-Co-Cr-O-Phase und gewährleistet damit einen zusätzlichen Schutz gegen flüchtige Chrom-Spezies, basierend auf der so genannten Getter-Wirkung. Dadurch kann eine Vergiftung der Kathode bzw. der Grenzfläche Kathode/Elektrolyt durch Chromablagerung effektiv verhindert werden.

Eine an bzw. zwischen die zu kontaktierenden elektrisch leitenden Elementen (Kathode und Interkonnektor) ausgebildete Funktionsschicht sollte eine Dicke bis zu 800 µm, bevorzugt mindestens 200 µm aufweisen, um den gewünschten Langzeitschutz bei gleichzeitiger ausreichend hoher elektrischer Leitfähigkeit gewährleisten zu können.

Eine erfindungsgemäße elektrische Funktionsschicht kann flächig oder in Form von Stegen auf der entsprechenden Oberfläche der Kathode und/oder der in das Innere der Brennstoffzelle weisenden Oberfläche eines Interkonnektors ausgebildet worden sein.

Bei die Herstellung einer erfindungsgemäßen elektrischen Funktionsschicht für Hochtemperaturbrennstoffzellen kann so vorgegangen werden, dass an elektrisch leitend miteinander zu verbindenden aber auch zwischen solchen elektrisch leitenden Elementen ein Gemisch, in dem kobalthaltiger Perowskit und Bi₂O₃ enthalten sind, aufgebracht wird. Bei einer gewünschten stoffschlüssigen Fügung kann auch ein haftfester Diffusionsverbund an den Grenzflächen, der miteinander zu kontaktierenden elektrisch leitenden Elemente, ausgebildet werden.

Wie bereits angedeutet, können beide Komponenten in Pulverform, mit einer mittleren Partikelgröße d₅₀ der Pulver im Bereich 1 bis 5 µm, eingesetzt werden, wobei es günstig ist, diese gemeinsam mit einem Binder und gegebenenfalls einem geeigneten Lösungsmittel, wie z.B. Wasser und/oder einem organischen Lösungsmittel miteinander zu vermischen, so dass eine viskose Masse, die mit dem Pulvergemisch und einer Flüssigkeit gebildet ist, mit pastöser Konsistenz hergestellt werden kann. In dieser pastösen Form kann das Gemisch aufgebracht werden. Dabei kann ein Auftrag durch Siebdruck-, Dispenser-Technik oder durch Aufrollen erfolgen. Alternativ hierzu kann auch ein Naßsprühverfahren (wet powder spraying) eingesetzt werden. Ein Gemisch mit entsprechend geeigneter Konsistenz kann aber auch im Nasspulverspritzverfahren aufgebracht werden.

Mit der erfindungsgemäßen Lösung kann ein dauerhafter und effektiver Schutz der Kathode vor einer Chrom-Kontamination, bei den innerhalb der Brennstoffzelle bei deren Betrieb herrschenden erhöhten Temperaturen und unter Einwirkung der Luft erreicht und eine Erhöhung des elektrischen Widerstandes vermieden werden. Des Weiteren kann die elektrokatalytische Aktivität einer Hochtemperaturbrennstoffzelle durch eine entsprechend erreichbare Vergrößerung der aktiven Kathodenfläche verbessert werden.

Wie bereits angedeutet, kann durch die hergestellte Funktionsschicht eine erhöhte Haftfestigkeit der Kontaktierung erreicht werden, was eine dauerhaft ausreichend hohe elektrische Leitfähigkeit bei auftretenden Thermozyklen gewährleistet.

Nachfolgend soll die Erfindung beispielhaft näher erläutert werden, ohne dass der Erfindungsgegenstand dadurch beschränkt werden soll.

Dabei zeigen:
Figur 1 ein Diagramm mit der temperaturabhängigen elektrischen Leitfähigkeit von Werkstoffen für erfindungsgemäße Funktionsschichten, die mit einer Haltezeit von 60 min bei 850°C einer Wärmebehandlung an einer siebgedruckten Funktionsschicht unterzogen worden sind;
Figur 2 Röntgendiffraktogramme für La_{0.79}Sr_{0.2}Mn_{0.5}Co_{0.5}O₃₋ₓ, La_{0.79}Sr_{0.2}Mn_{0.2}Co_{0.5}O₃₋ₓ+Bi₂O₃ Gemische vor und nach einer Wärmebehandlung von 1 Stunde bei 850°C;
Figur 3 das lineare Schwindverhalten bis 930°C von für die Funktionsschicht einsetzbaren Werkstoffen und einer Glaskeramik und
Figur 4 Gefüge einer siebgedruckten Funktionsschicht nach Sinterung bei 930 °C und nach Betrieb in einem Hochtemperaturbrennstoffzellenstapel bei 850 °C.

Nachfolgend soll ein Ausführungsbeispiel für die Herstellung einer elektrisch leitfähigen Funktionsschicht zwischen Kathode und Interkonnektor einer Hochtemperaturbrennstoffzelle beschrieben werden.

Als Ausgangswerkstoffe wurden La_{0.79}Sr_{0.2}Mn_{0.5}Co_{0.5}O₃₋ₓ, und Bi₂O₃ eingesetzt. Dabei wurden 50 g des Perowskitpulvers mit der Zusammensatzung La_{0.79}Sr_{0.2}Mn_{0.5}Co_{0.5}O₃₋ₓ mit einer mittleren Partikelgröße zwischen 1.5 bis 3.5 µm mit 5.55 g Bi₂O₃ in einer ethanolischen Lösung vermischt und anschließend auf einer Rollenbank bzw. einer Planetenkugelmühle homogenisiert. Die homogenisierte Pulvermischung wurde getrocknet und gesiebt. Das gesiebte Pulvergemisch wurde mit einem terpineolhaltigem Lösungsmittel, dem zuvor Ethylzellulose als Binder zugesetzt wurde, gemischt und anschließend auf einem Drei-Walzen-Stuhl so aufbereitet, dass eine hochviskose fließfähige Paste entstanden war.

Die Paste wurde durch eine Dickschichttechnik, wie z.B. Sieb- bzw. Maskendruck oder Roll-Coating, auf die Stege eines Interkonnektors aufgebracht. Vorteilhaft ist jedoch die vollständige Beschichtung des Interkonnektors, bei der Stege und Gaskanäle, sowie die Kathode vom MEA beschichtet werden. Die Dicke der Schicht sollte nach der Beschichtung etwa 20-200µm betragen.

Nach dem Trocknen der Schicht wurden die vorbereiteten Interkonnektorplatten und die am Rand mit Glaslot (Glaskeramik) beschichteten Kathoden von Brennstoffzellen abwechselnd mit den jeweiligen Anoden zu einem Stapel zusammengesetzt.

Nach dem Einsetzen auf eine Metallplatte mit Gasversorgungseinrichtung wurde dieser Stapel auf 800-950°C, vorzugsweise 850°C für 2 bis 6 Stunden aufgeheizt und war dann einsatzfähig. Dies kann bei normalem Erstbetrieb einer Hochtemperaturbrennstoffzelle erreicht werden.

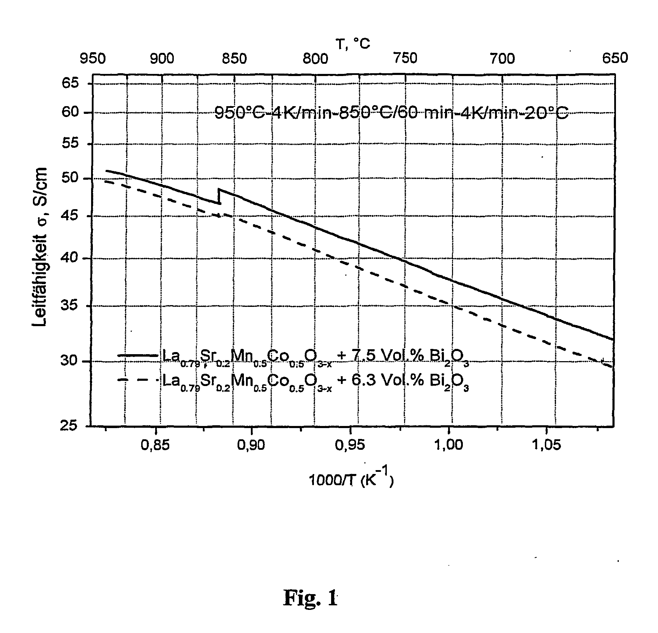

Die Änderung der elektrischen Leitfähigkeit in Abhängigkeit von der Temperatur ist für Verbindungen, die nach dem Ausführungsbeispiel hergestellt worden sind, mit Figur 1 verdeutlicht.

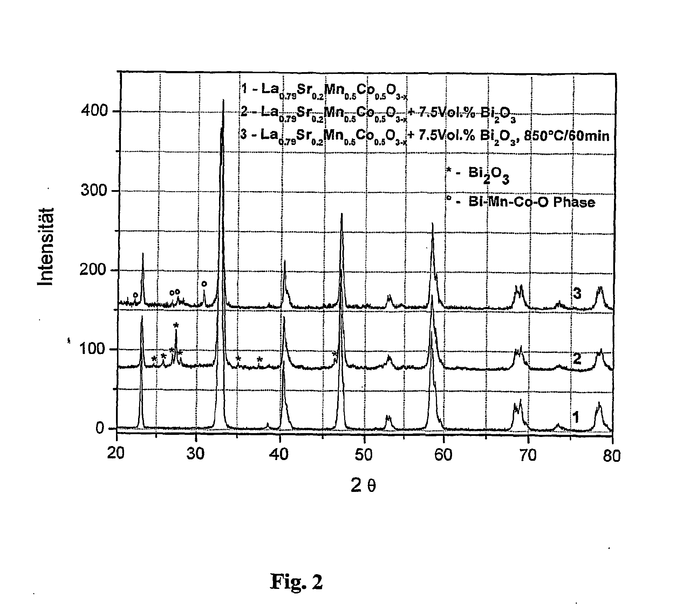

Mit den in Figur 2 gezeigten Röntgendiffraktogrammen wird deutlich, dass der erfindungsgemäße Werkstoff für die Funktionsschicht, des bei 850°C gesinterten Gemisches aus La_{0.79}Sr_{0.2}Mn_{0.5}Co_{0.5}O₃₋ₓ und Bi₂O₃, ein Werkstoff ist, der mindestens zwei Phasen aufweist.

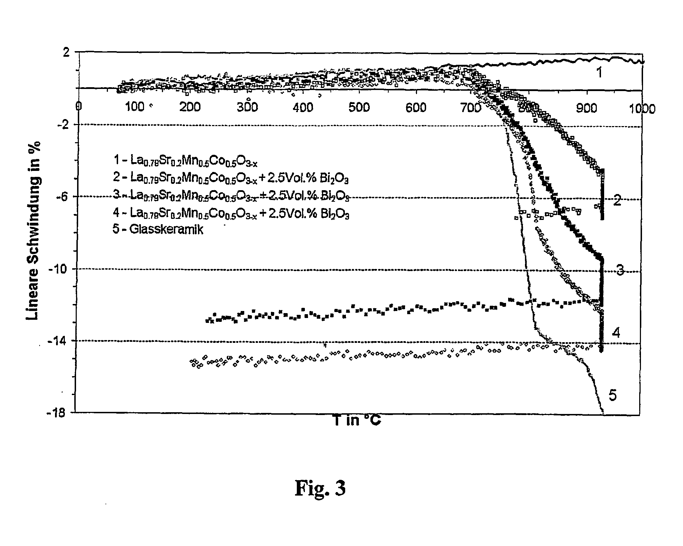

Aus dem in Figur 3 gezeigten Diagramm ist die Schwindung von La_{0.79}Sr_{0.2}Mn_{0.5}Co_{0.5}O₃₋ₓ+Bi₂O₃ mit unterschiedlichen Verhältnissen von La_{0.79}Sr_{0.2}Mn_{0.5}Co_{0.5}O₃₋ₓ und Bi₂O₃ im Vergleich zu Glaskeramik im Temperaturbereich von 0 bis 930 °C angegeben und es wird deutlich, dass nur geringfügige Differenzen der Endschwindung dieser Werkstoffe auch bei der Betriebstemperatur vorhanden sind, so dass sie problemlos miteinander in Kombination auch bei Hochtemperaturbrennstoffzellen eingesetzt werden können. Durch Variation der entsprechenden Verhältnisse von La_{0.79}Sr_{0.2}Mn_{0.5}Co_{0.5}O₃₋ₓ und Bi₂O₃ und dem Temperaturprofil bei der Wärmebehandlung kann die Schwindung der Funktionsschicht auf die Schwindung der Glasskeramik hin optimiert werden. Es können so der Herstellungsaufwand reduziert und Eigenspannungen an Hochtemperaturbrennstoffzellen bei allen auftretenden Temperaturen vermieden werden.

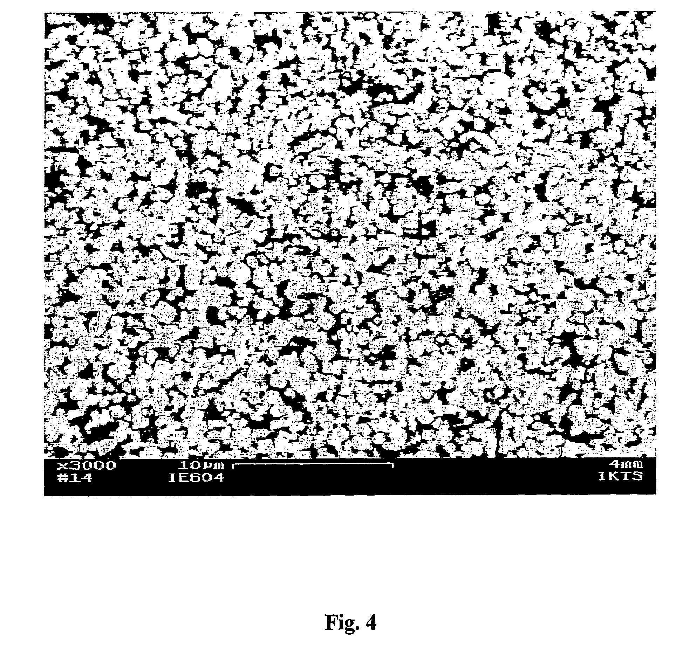

Die Morphologie einer siebgedruckten Funktionsschicht, die nach Sinterung bei 930 °C und nach Betrieb in einem Hochtemperaturbrennstoffzellenstapel bei 850 °C gebildet worden ist, ist in Figur 4 gezeigt. Die einzelnen Perowskitteilchen sind bereits bei der Betriebstemperatur von Hochtemperaturbrennstoffzellen sehr gut miteinander versintert und bilden ein stabiles Netzwerk mit hoher elektrischer Leitfähigkeit.

## Patentansprüche

1. Funktionsschicht für Hochtemperaturbrennstoffzellen, die zwischen einem Interkonnektor und einer Kathode angeordnet ist, **dadurch gekennzeichnet, dass** sie aus einem Werkstoff gebildet ist, der mindestens zwei Phasen aufweist; wobei eine erste Phase eine Bismut-Kobalthaltige Perowskit-Keramik und eine zweite Phase ein Bismutmanganit und/oder Bismutkobaltit (Bi-Mn-Co-O) ist.

2. Funktionsschicht nach Anspruch 1, **dadurch gekennzeichnet, dass**, die zwei Phasen im Werkstoff homogen verteilt sind.

3. Funktionsschicht nach Anspruch 1 oder 2, **dadurch gekennzeichnet, dass** die erste Phase mit einem Anteil von 90 bis 98 Vol.-% und die zweite Phase mit einem Anteil von 2 bis 10 Vol.-% im Werkstoff enthalten sind.

4. Funktionsschicht nach einem der vorhergehenden Ansprüche, **dadurch gekennzeichnet, dass** die erste Phase mit einem Bismut-Kobalthaltigen Perowskit gemäß der Formel Ln_{1-x-z}Bi_{z}AₓM_{1-y}Co_{y}O_{3-δ}, mit x≤0.35, 0≤z≤0.05, 0.1≤y≤0.6, Ln = Seltenerden, A = Erdalkali, M = Übergangsmetalle gebildet ist.

5. Funktionsschicht nach einem der vorhergehenden Ansprüche, **dadurch gekennzeichnet, dass** die Funktionsschicht einen Interkonnektor und eine Kathode stoffschlüssig miteinander verbindet.

6. Funktionsschicht nach einem der vorhergehenden Ansprüche, **dadurch gekennzeichnet, dass** die Funktionsschicht eine Dicke bis zu 800 µm aufweist.

7. Funktionsschicht nach einem der vorhergehenden Ansprüche, **dadurch gekennzeichnet, dass** die Funktionsschicht eine elektrische Leitfähigkeit von mindestens 10 S/cm, bei Temperaturen oberhalb 700 °C aufweist.

8. Verfahren zur Herstellung von Funktionsschichten nach einem der Ansprüche 1 bis 7, **dadurch gekennzeichnet, dass** ein Pulvergemisch, in dem eine kobalthaltige Perowskitkeramik und Bismutoxid enthalten sind, hergestellt und anschließend eine Wärmebehandlung bei Temperaturen im Bereich 700 °C bis 1000°C durchgeführt wird, wobei ein zwei Phasen aufweisender Werkstoff durch Flüssigphasensinterung erhalten wird.

9. Verfahren nach Anspruch 8, **dadurch gekennzeichnet, dass** ein Pulvergemisch, in dem kobalthaltige Perowskitkeramik mit einem Anteil im Bereich 90 bis 98 Vol.-% und Bismutoxid mit einem Anteil von 2 bis 10 Vol.-% enthalten sind, eingesetzt wird.

10. Verfahren nach Anspruch 8 oder 9, **dadurch gekennzeichnet, dass** eine kobalthaltige Perowskitkeramik, die der Formel Ln_{1-x-z}AₓM_{1-y}Co_{y}O_{3δ}, mit x≤0.35, 0≤z≤0.05, 0.1≤y≤0.6 und Ln = Seltenerden, A = Erdalkali, M = Übergangsmetall, entspricht, eingesetzt wird.

11. Verfahren nach einem der Ansprüche 8 bis 10, **dadurch gekennzeichnet, dass** mit dem Pulvergemisch und einer Flüssigkeit eine viskose Masse hergestellt und die viskose Masse auf eine Oberfläche einer Kathode und/oder eines Interkonnektors aufgetragen wird, bevor die Wärmebehandlung durchgeführt wird.

12. Verfahren nach Anspruch 11, **dadurch gekennzeichnet, dass** die Wärmebehandlung bei der Erstinbetriebnahme einer Hochtemperaturbrennstoffzelle durchgeführt wird.

13. Verfahren nach Anspruch 11, **dadurch gekennzeichnet, dass** die viskose Masse vollflächig oder in Form von Stegen auf eine Oberfläche einer Kathode und/oder eines Interkonnektors aufgebracht wird.

14. Verfahren nach einem der Ansprüche 8 bis 13, **dadurch gekennzeichnet, dass** die viskose Masse mit einem zusätzlich enthaltenen organischen Binder hergestellt wird.

15. Verfahren nach einem der Ansprüche 8 bis 14, **dadurch gekennzeichnet, dass** Pulver mit einer mittleren Partikelgröße im Bereich 1 bis 5 µm eingesetzt werden.

## Claims

1. A function layer for high-temperature fuel cells, which is arranged between an interconnector and a cathode, **characterised in that** it is formed from a material which has at least two phases: a first phase being a bismuth/cobalt-containing perovskite ceramic and a second phase being a bismuth manganite and/or bismuth cobaltite (Bi-Mn-Co-O).

2. A function layer according to Claim 1, **characterised in that** the two phases are distributed homogeneously in the material.

3. A function layer according to Claim 1 or 2, **characterised in that** the first phase is contained in the material in a proportion of 90 to 98% by volume and the second phase in a proportion of 2 to 10% by volume.

4. A function layer according to one of the preceding claims, **characterised in that** the first phase is formed with a bismuth/cobalt-containing perovskite in accordance with the formula Ln_{1-x-z}Bi_{z}AₓM_{1-y}Co_{y}O_{3-δ}, where x≤0.35, 0≤z≤0.05, 0.1≤y≤0.6, Ln = rare earths, A = alkaline earth, M = transition metals.

5. A function layer according to one of the preceding claims, **characterised in that** the function layer connects an interconnector and a cathode together by means of a material-to-material connection.

6. A function layer according to one of the preceding claims, **characterised in that** the function layer has a thickness of up to 800 µm.

7. A function layer according to one of the preceding claims, **characterised in that** the function layer has an electrical conductivity of at least 10 S/cm, at temperatures above 700°C.

8. A method for the production of function layers according to one of Claims 1 to 7, **characterised in that** a powder mixture in which a cobalt-containing perovskite ceramic and bismuth oxide are contained is produced and then a heat treatment is carried out at temperatures in the range of 700°C to 1000°C, with a material having two phases being obtained by liquid-phase sintering.

9. A method according to Claim 8, **characterised in that** a powder mixture in which cobalt-containing perovskite ceramic is contained in a proportion of 90 to 98% by volume and bismuth oxide in a proportion of 2 to 10% by volume is used.

10. A method according to Claim 8 or 9, **characterised in that** a cobalt-containing perovskite ceramic which corresponds to the formula Ln_{1-x-z}AₓM_{1-y}Co_{y}C_{3-δ}, where x≤ 0.35, 0≤z≤0.05, 0.1≤y≤0.6 and Ln = rare earths, A = alkaline earth, M = transition metals, is used.

11. A method according to one of Claims 8 to 10, **characterised in that** a viscous mass is produced with the powder mixture and a liquid, and the viscous mass is applied to a surface of a cathode and/or an interconnector before the heat treatment is carried out.

12. A method according to Claim 11, **characterised in that** the heat treatment is carried out upon the first start-up of a high-temperature fuel cell.

13. A method according to Claim 11, **characterised in that** the viscous mass is applied over the full surface or in the form of lands on a surface of a cathode and/or an interconnector.

14. A method according to one of Claims 8 to 13, **characterised in that** the viscous mass is produced with an additionally contained organic binder.

15. A method according to one of Claims 8 to 14, **characterised in that** powders with an average particle size in the range of 1 to 5 µm are used.

## Revendications

1. Couche fonctionnelle pour piles à combustible haute température, qui est disposée entre un interconnecteur et une cathode, **caractérisée en ce qu'**elle est formée d'un matériau qui comporte au moins deux phases ; dans lequel matériau une première phase est une céramique de type pérovskite contenant du bismuth et du cobalt et une seconde phase un manganite de bismuth et/ou un cobaltite de bismuth (Bi-Mn-Co-O).

2. Couche fonctionnelle selon la revendication 1, **caractérisée en ce que** les deux phases sont réparties de manière homogène dans le matériau.

3. Couche fonctionnelle selon la revendication 1 ou 2, **caractérisée en ce que** la première phase, contenue dans le matériau, constitue une part de volume de 90 à 98 % et la seconde phase, contenue dans le matériau, une part de volume de 2 à 10%.

4. Couche fonctionnelle selon l'une quelconque des revendications précédentes, **caractérisée en ce que** la première phase est formée d'une pérovskite contenant du bismuth et du cobalt, répondant à la formule Ln_{1-x-z}Bi_{z}AₓM_{1-y}Co_{y}O_{3-δ}, avec x ≤ 0,35, 0 ≤ x ≤ 0,05, 0,1 ≤ y ≤ 0,6, Ln = terres rares, A = métal alcalino-terreux, M = métaux de transition,

5. Couche fonctionnelle selon l'une quelconque des revendications précédentes, **caractérisée en ce que** la couche fonctionnelle relie un interconnecteur et une cathode l'un à l'autre par liaison de matière.

6. Couche fonctionnelle selon l'une quelconque des revendications précédentes, **caractérisée en ce que** la couche fonctionnelle présente une épaisseur allant jusqu'à 800 µm.

7. Couche fonctionnelle selon l'une quelconque des revendications précédentes, **caractérisée en ce que** la couche fonctionnelle présente une conductivité électrique d'au moins 10 S/cm, à des températures supérieures à 700°C.

8. Procédé de fabrication de couches fonctionnelles selon l'une quelconque des revendications 1 à 7, **caractérisé en ce que** l'on fabrique un mélange pulvérulent, qui contient une céramique de type pérovskite, contenant du cobalt, et de l'oxyde de bismuth et **en ce que** l'on procède ensuite à un traitement thermique à des températures se situant dans une plage de températures allant de 700 °C à 1000 °C, pendant lequel l'on obtient, par frittage en phase liquide, un matériau comportant deux phases.

9. Procédé selon la revendication 8, **caractérisé en ce que** l'on utilise un mélange pulvérulent, qui contient une céramique de type pérovskite, contenant du cobalt, constituant une part de volume de 90 à 98 % et de l'oxyde de bismuth constituant une part de volume de 2 à 10%.

10. Procédé selon la revendication 8 ou 9, **caractérisé en ce que** l'on utilise une céramique de type pérovskite contenant du cobalt, qui répond à la formule Ln_{1-x-z}AₓM_{1-y}Co_{y}O_{3-δ}, avec x ≤ 0,35, 0 ≤ z ≤ 0,05, 0,1 ≤ y ≤ 0,6 et Ln = terres rares, A = métal alcalino-terreux, M = métal de transition.

11. Procédé selon l'une quelconque des revendications 8 à 10, **caractérisé en ce que** l'on fabrique une masse visqueuse à partir du mélange pulvérulent et d'un liquide et **en ce que** l'on applique la masse visqueuse sur une surface d'une cathode et/ou d'un interconnecteur avant d'effectuer le traitement thermique.

12. Procédé selon la revendication 11, **caractérisé en ce que** le traitement thermique est réalisé lors de la première mise en service d'une pile à combustible haute température.

13. Procédé selon la revendication 11, **caractérisé en ce que** la masse visqueuse est appliquée sur une surface d'une cathode et/ou d'un interconnecteur en la couvrant entièrement ou sous forme de barrettes.

14. Procédé selon l'une quelconque des revendications 8 à 13, **caractérisé en ce que** la masse visqueuse est fabriquée avec un liant organique, qui lui est additionné.

15. Procédé selon l'une quelconque des revendications 8 à 14, **caractérisé en ce que** l'on utilise des poudres dont la taille particulaire moyenne se situe dans une plage allant de 1 à 5 µm.
